# EUROPEAN PATENT APPLICATION

(11) **EP 4 366 242 A1**
(43) Date of publication of application: **08.05.2024**
(21) Application number: 22205366.2
(22) Date of filing: 03.11.2022
(51) Int. Cl.: H04L 12/18

(54) **IMPROVEMENT OF MULTICAST AND BROADCAST SERVICES IN MOBILE SCENARIOS**

(71) Applicant: Nokia Technologies Oy, 02610 Espoo (FI)
(72) Inventor: Malkamäki, Esa, 02130 Espoo (FI); Godin, Philippe, 78000 Versailles (FR); Landais, Bruno, 22560 Pleumeur-Bodou (FR); Thomas, Belling, 85435 Erding (DE); Ugur Baran, Elmali, 80639 Munich (DE)
(74) Representative: TBK

(57) **Abstract**

There are provided measures for improvement of multicast and broadcast services in mobile scenarios. Such measures exemplarily comprise, at a user plane function entity in a mobile network, resetting sequence numbers corresponding to one or several multicast and broadcast service flows out of all multicast and broadcast service flows of a multicast and broadcast service session, and transmitting information indicative of said resetting.

## Description

### Field

Various example embodiments relate to improvement of multicast and broadcast services in mobile scenarios. More specifically, various example embodiments exemplarily relate to measures (including methods, apparatuses and computer program products) for realizing improvement of multicast and broadcast services in mobile scenarios.

### Background

The present specification generally relates to multicast and broadcast services (MBS).

An MBS mobility approach relies on a packet data convergence protocol (PDCP) COUNT (a counter consisting of a hyper frame number (HFN) and a sequence number (SN)) synchronization between radio access network (RAN) nodes based on core network (CN) SNs sent by a multicast broadcast user plane function (MB-UPF) entity.

In relation to multicast session management, for 5^{th} Generation core (5GC) shared MBS traffic delivery, an MBS session resource comprises one or several multicast and broadcast services radio bearer (MRB). If minimization of data loss is applied for a given MRB, synchronization of allocation of PDCP COUNT values is applied by either or a combination of the following methods:
- derivation of the PDCP COUNT values by means of a downlink (DL) MBS quality of service (QoS) flow identifier (QFI) SN provided on NG-U; here, synchronization in terms of MBS QoS flow to MRB mapping and PDCP SN size of the corresponding MRB among gNBs are achieved by means of network implementation;
- deployment of a shared NG-U termination at next generation RAN (NG-RAN), shared among gNBs, which comprises a common entity for assignment of PDCP COUNT values; here, synchronization in terms of MBS QoS flow to MRB mapping and PDCP SN size of the corresponding MRB among gNBs may be achieved by means of network implementation.

If PDCP COUNT values are derived from a DL MBS QFI SN provided on NG-U and only one QoS flow is mapped to an MRB, the gNB shall set the PDCP COUNT value of PDCP protocol data unit (PDU) to the value of the DL MBS QFI SN provided with the received packet over NG-U. If PDCP COUNT values are derived from a DL MBS QFI SN provided on NG-U and multiple QoS flows are mapped to an MRB, the gNB may derive the PDCP COUNT value of the PDCP PDU from the sum of the DL MBS QFI SNs of the QoS flows mapped to this MRB.

In relation to handover between multicast supporting cells in the context of MBS, a source gNB may propose data forwarding for some MRBs to minimize data loss and may exchange the corresponding MRB PDCP SN with the target gNB during the handover preparation:
- The lossless handover for multicast service is supported for the handover between MBS supporting cells if the user equipment (UE) is configured with precision time protocol (PTP) radio link control (RLC) acknowledged mode (AM) entity in target cell MRB of a UE, regardless of whether the UE is configured with PTP RLC AM entity in the source cell or not.
- In order to support lossless handover for multicast service, the network has to ensure DL PDCP COUNT value synchronization and continuity between the source cell and the target cell. Furthermore, data forwarding from the source gNB to the target gNB and/or PDCP status report provided by a UE for an MRB for multicast session can be used during lossless handover.

The DL PDCP COUNT parameter is specified as having a length of 32 bits and as being composed of a HFN and the PDCP SN. The size of the HFN part in bits is equal to 32 minus the length of the PDCP SN. For the DL PDCP COUNT parameter it is further specified that it does not wrap around (i.e., is not allowed to wrap around). Here, wrapping around is reaching a maximum value and therefore continuing (again) at zero.

As mentioned, thus, the PDCP COUNT is derived from the CN SN (DL MBS QFI SN provided on NG-U) and is not allowed to wrap around.

However, if an MBS multicast service is running for a very long time, then at some point the PDCP COUNT would wrap-around if no actions are taken.

One attempt addressing this issue might be releasing the MRB and adding a new MRB for the same QoS flow. However, since the PDCP COUNT is derived from the CN SN (DL MBS QFI SN provided on NG-U), even if the MRB would be released and a new MRB would be added for the MBS QoS flow, the PDCP COUNT of the new MRB would continue (would not reset) since the PDCP COUNT is derived from the CN SN (DL MBS QFI SN provided on NG-U).

A further attempt addressing this issue might be, since PDCP COUNT is derived from MBS QFI SN, the gNB has to release and add MRB when the last packet before wrapping around is received and then to buffer the next packet until the MRB release and addition for all the UEs in the group is finished. However, this would cause delay and extra complexity in gNB.

A further attempt addressing this issue might be letting the CN avoid the PDCP COUNT to wrap around by implementation, i.e., that the CN releases and adds multicast session before the PDCP COUNT wraps around (e.g. during session inactive period).

As the gNB allocates the PDCP COUNT value based on the QFI SN (which is provided by the MB-UPF) per flow rather than gNB itself, it may be advantageous that the CN should fulfils the requirement, i.e., ensures that the PDCP COUNT value does not wrap around.

A further attempt addressing this issue might be to configure two MRBs to carry one QoS flow simultaneously but temporarily, when the gNB finds that the PDCP COUNT of the old MRB is near (2³² - 1). That is,
- Packets with PDCP COUNT values up to (2³² - 1) are delivered (and retransmitted, if needed) through the old MRB, and
- Packets with PDCP COUNT values from zero on are delivered through the new MRB.

For a split gNB, a three-step approach might be performed:
A first step is to enable the gNB centralized unit control plane (CU-CP) (gNB-CU-CP) to get aware of the PDCP COUNT values. Therefore, an existing method of pushing PDCP COUNT from the gNB-CU-UP toward the gNB-CU-CP might be reused. That is, for example, an existing method may be reused that gNB-CU-UP may push PDCP COUNT values toward the gNB-CU-CP in the MC bearer context modification required message, for the purpose that the gNB-CU-CP can get aware that the PDCP count is near its upper limit.

A second step is establishing the two MRBs. The simplest approach may be to add a new information element (IE) e.g. named "old MRB ID" into "MC MRB To Setup or Modify Item", and to specify that the gNB-CU-UP shall handle differently the packets with counts up to (2³² - 1) and from zero on, if the "old MRB ID" IE is present. That is, for example, a new IE may be added named "old MRB ID" into the "MC MRB To Setup or Modify Item" type, and it may be specified that the gNB-CU-UP shall handle differently the packets with PDCP counts up to the upper limit and from zero on, if the "old MRB ID" IE is present.

A third/final step is releasing the old MRB. This may be performed by existing signalling.

However, using temporary two MRBs may not always be possible if some UEs have reached the radio bearer limit. Further, using two MRBs does not guarantee in-order delivery unless the gNB delays transmission on the new MRB such that possible hybrid automatic repeat request (HARQ) / radio link control (RLC) retransmissions have completed for all UEs (UE is not aware that the new MRB continues the old MRB, i.e., it cannot be assumed that UE would buffer PDCP service data units (SDU) of the new MRB until old MRB has completed its reception). Nevertheless, a delay may though be less than with the attempt discussed above (according to which the gNB has to release and add MRB when the last packet before wrapping around is received and then to buffer the next packet until the MRB release and addition for all the UEs in the group is finished).

Hence, the problem arises that the not allowed wrap around of the PDCP COUNT ("counter") cannot be avoided so far without detrimental effects on the network and in particular on the running MBS session(s).

Hence, there is a need to provide for improvement of multicast and broadcast services in mobile scenarios.

### Summary

Various example embodiments aim at addressing at least part of the above issues and/or problems and drawbacks.

Various aspects of example embodiments are set out in the appended claims.

According to an exemplary aspect, there is provided an apparatus of a user plane function entity in a mobile network, the apparatus comprising means for resetting sequence numbers corresponding to one or several multicast and broadcast service flows out of all multicast and broadcast service flows of a multicast and broadcast service session, and means for transmitting information indicative of said resetting.

According to an exemplary aspect, there is provided an apparatus of a session management function entity in a mobile network, the apparatus comprising means for receiving, from a user plane function entity in said mobile network, information indicative of that a maximum of a counter or a threshold related to one or several multicast and broadcast service flows of a multicast and broadcast service session is neared, means for deciding to trigger resetting sequence numbers corresponding to said one or several multicast and broadcast service flows of said multicast and broadcast service session, and means for transmitting, towards said user plane function entity in said mobile network, upon said deciding, reset trigger information.

According to an exemplary aspect, there is provided an apparatus of a session management function entity in a mobile network, the apparatus comprising means for receiving, from an access node entity in said network, mapping information on multicast and broadcast service flows out of all multicast and broadcast service flows of a multicast and broadcast service session mapped to a multicast and broadcast service radio bearer, and means for transmitting, towards a user plane function entity in said mobile network, said mapping information.

According to an exemplary aspect, there is provided an apparatus of a session management function entity in a mobile network, the apparatus comprising means for receiving, from an access node entity in said network, reset suggestion information indicative of that a maximum of a counter related to a multicast and broadcast service radio bearer of a multicast and broadcast service session is neared, and means for transmitting, towards a user plane function entity in said mobile network, said reset suggestion information.

According to an exemplary aspect, there is provided an apparatus of a session management function entity in a mobile network, the apparatus comprising means for transmitting, towards an access node entity in said mobile network, information indicative of resetting sequence numbers corresponding to one or several multicast and broadcast service flows of a multicast and broadcast service session.

According to an exemplary aspect, there is provided an apparatus of an access node entity in a mobile network, the apparatus comprising means for receiving information indicative of resetting sequence numbers corresponding to one or several multicast and broadcast service flows of a multicast and broadcast service session, and means for reconfiguring one or several terminals receiving said multicast and broadcast service session in relation to one or more radio bearers mapped to the said one or several multicast and broadcast service flows.

According to an exemplary aspect, there is provided a computer program product comprising computer-executable computer program code which, when the program is run on a computer (e.g. a computer of an apparatus according to any one of the aforementioned apparatus-related exemplary aspects of the present disclosure), is configured to cause the computer to carry out the method according to any one of the aforementioned method-related exemplary aspects of the present disclosure.

Such computer program product may comprise (or be embodied) a (tangible) computer-readable (storage) medium or the like on which the computer-executable computer program code is stored, and/or the program may be directly loadable into an internal memory of the computer or a processor thereof.

Any one of the above aspects enables an efficient avoidance/suppression of the not allowed wrap around of the PDCP COUNT ("counter") while suppressing/reducing detrimental effects on the network and in particular on the running MBS session(s) to thereby solve at least part of the problems and drawbacks identified in relation to the prior art.

By way of example embodiments, there is provided improvement of multicast and broadcast services in mobile scenarios. More specifically, by way of example embodiments, there are provided measures and mechanisms for realizing improvement of multicast and broadcast services in mobile scenarios.

Thus, improvement is achieved by methods, apparatuses and computer program products enabling/realizing improvement of multicast and broadcast services in mobile scenarios.

### Brief description of the drawings

In the following, the present disclosure will be described in greater detail by way of non-limiting examples with reference to the accompanying drawings, in which
Figure 1 is a block diagram illustrating an apparatus according to example embodiments,
Figure 2 is a block diagram illustrating an apparatus according to example embodiments,
Figure 3 is a block diagram illustrating an apparatus according to example embodiments,
Figure 4 is a block diagram illustrating an apparatus according to example embodiments,
Figure 5 is a block diagram illustrating an apparatus according to example embodiments,
Figure 6 is a block diagram illustrating an apparatus according to example embodiments,
Figure 7 is a schematic diagram of a procedure according to example embodiments,
Figure 8 is a schematic diagram of a procedure according to example embodiments,
Figure 9 is a schematic diagram of a procedure according to example embodiments,
Figure 10 is a schematic diagram of a procedure according to example embodiments,
Figure 11 is a schematic diagram of a procedure according to example embodiments,
Figure 12 is a schematic diagram of a procedure according to example embodiments,
Figure 13 shows a schematic diagram of signaling sequences according to example embodiments,
Figure 14 shows a schematic diagram of signaling sequences according to example embodiments,
Figure 15 shows a schematic diagram of signaling sequences according to example embodiments,
Figure 16 shows a schematic diagram of signaling sequences according to example embodiments, and
Figure 17 is a block diagram alternatively illustrating apparatuses according to example embodiments.

### Detailed description

The present disclosure is described herein with reference to particular non-limiting examples and to what are presently considered to be conceivable embodiments. A person skilled in the art will appreciate that the disclosure is by no means limited to these examples, and may be more broadly applied.

It is to be noted that the following description of the present disclosure and its embodiments mainly refers to specifications being used as non-limiting examples for certain exemplary network configurations and deployments. Namely, the present disclosure and its embodiments are mainly described in relation to 3GPP specifications being used as non-limiting examples for certain exemplary network configurations and deployments. As such, the description of example embodiments given herein specifically refers to terminology which is directly related thereto. Such terminology is only used in the context of the presented non-limiting examples, and does naturally not limit the disclosure in any way. Rather, any other communication or communication related system deployment, etc. may also be utilized as long as compliant with the features described herein.

Hereinafter, various embodiments and implementations of the present disclosure and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

According to example embodiments, in general terms, there are provided measures and mechanisms for (enabling/realizing) improvement of multicast and broadcast services in mobile scenarios.

Example embodiments start from a pre-requisite that all gNBs in the network have synchronized allocation of their PDCP COUNT ("counter") in order to minimize data loss by means of network implementation (e.g. as specified in TS 38.300 section 16.10.5.1): derivation of the PDCP COUNT values by means of a DL MBS QFI SN provided on NG-U, wherein synchronization in terms of MBS QoS flow to MRB mapping and PDCP SN size of the corresponding MRB among gNBs are achieved by means of network implementation.

According to example embodiments, CN takes care of the PDCP COUNT wrap-around issue for MRB since PDCP COUNT is derived from the CN SN (DL MBS QFI SN provided on NG-U).

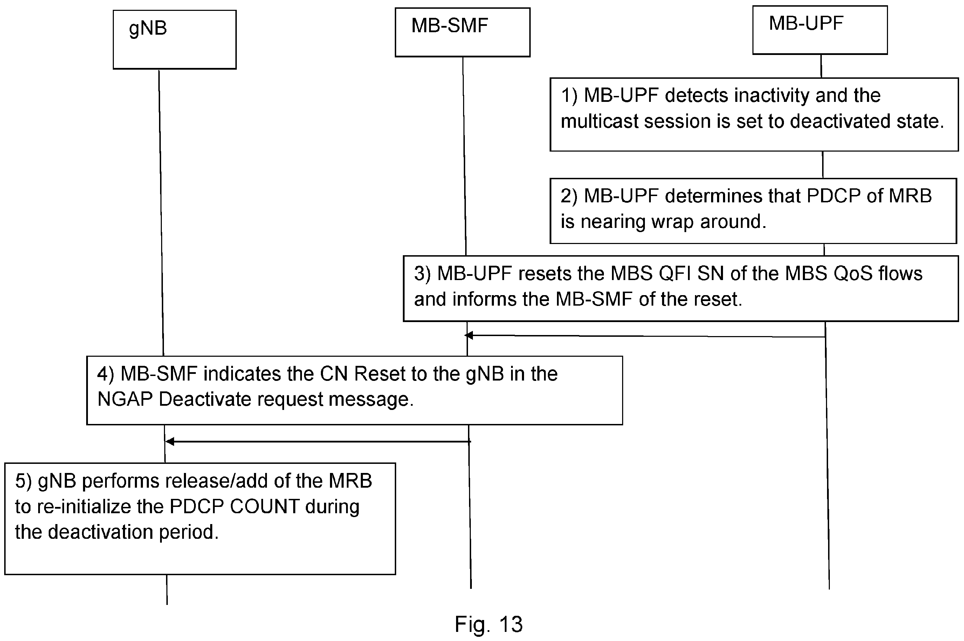

Figure 13 shows a schematic diagram of signaling sequences according to example embodiments, and in particular illustrates a CN initiated reset and release/add of the MRB before PDCP COUNT wrap around.

That is, in brief, according to example embodiments, CN initiates reset and release/add of the MRB before PDCP COUNT wrap around.

In a step 1 of Figure 13, according to example embodiments, the multicast session enters deactivated state in MB-UPF (either MB-UPF detects inactivity or the deactivation is triggered from MB-SMF).

In a step 2 of Figure 13, according to example embodiments, the MB-UPF detects that PDCP COUNT is nearing wrap around e.g. by summing up the MBS QFI SN of all MBS QoS flows of the MBS session.

In a step 3 of Figure 13, according to example embodiments, the MB-UPF resets the MBS QFI SN and informs the MB-SMF.

In a step 4 of Figure 13, according to example embodiments, the MB-SMF indicates the reset in a next generation application protocol (NGAP) multicast deactivate request to gNB.

In a step 5 of Figure 13, according to example embodiments, the gNB performs MRB release/add and re-initializes the PDCP COUNT to zero. Alternatively, gNB could perform PDCP re-establishment for the PDCP entity of the MRB. Currently, PDCP COUNT can be initialized for unacknowledged mode (UM) MRBs but there are proposals to allow it also for acknowledged mode (AM) MRBs.

Example embodiments as specified and explained below are not limited to such brief example behavior.

Example embodiments are specified below in more detail.

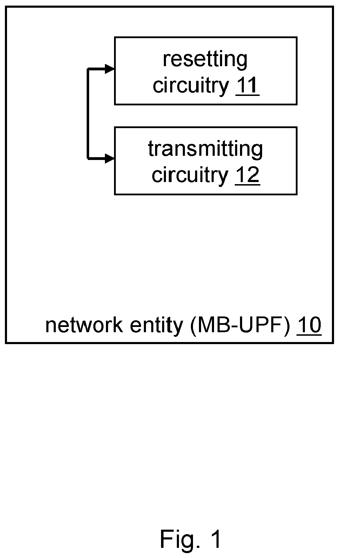

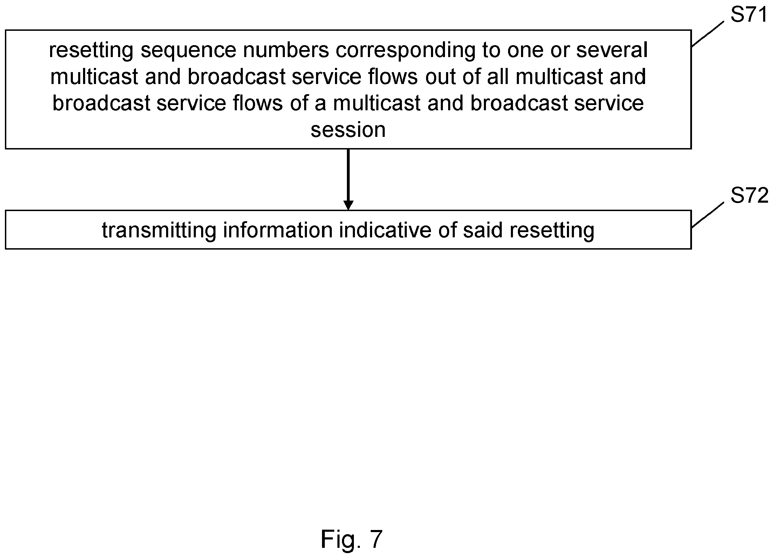

Figure 1 is a block diagram illustrating an apparatus according to example embodiments. The apparatus may be a network node or entity 10 such as a multicast broadcast user plane function entity (or a network node or entity embodying such functionality) in a mobile network comprising a resetting circuitry 11 and a transmitting circuitry 12. The resetting circuitry 11 resets sequence numbers corresponding to one or several multicast and broadcast service flows out of all multicast and broadcast service flows of a multicast and broadcast service session. The transmitting circuitry 12 transmits information indicative of said resetting. Figure 7 is a schematic diagram of a procedure according to example embodiments. The apparatus according to Figure 1 may perform the method of Figure 7 but is not limited to this method. The method of Figure 7 may be performed by the apparatus of Figure 1 but is not limited to being performed by this apparatus.

As shown in Figure 7, a procedure according to example embodiments comprises an operation of resetting (S71) sequence numbers corresponding to one or several multicast and broadcast service flows out of all multicast and broadcast service flows of a multicast and broadcast service session, and an operation of transmitting (S72) information indicative of said resetting.

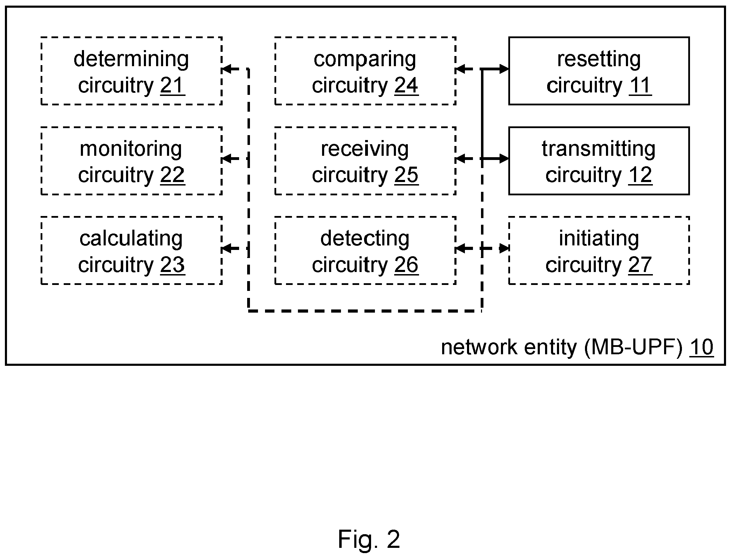

Figure 2 is a block diagram illustrating an apparatus according to example embodiments. In particular, Figure 2 illustrates a variation of the apparatus shown in Figure 1. The apparatus according to Figure 2 may thus further comprise a determining circuitry 21, a monitoring circuitry 22, a calculating circuitry 23, a comparing circuitry 24, a receiving circuitry 25, a detecting circuitry 26, and/or an initiating circuitry 27.

In an embodiment at least some of the functionalities of the apparatus shown in Figure 1 (or 2) may be shared between two physically separate devices forming one operational entity. Therefore, the apparatus may be seen to depict the operational entity comprising one or more physically separate devices for executing at least some of the described processes.

According to further example embodiments, said information indicative of said resetting is transmitted towards a session management function entity in said mobile network.

According to further example embodiments, said information indicative of said resetting is transmitted towards an access node entity in said mobile network.

According to further example embodiments, said resetting is done at a time of a deactivation of said multicast and broadcast service session.

According to further example embodiments, said resetting is done at a time of a subsequent activation of said multicast and broadcast service session.

According to a variation of the procedure shown in Figure 7, exemplary additional operations are given, which are inherently independent from each other as such. According to such variation, an exemplary method according to example embodiments may comprise an operation of determining that a maximum of a counter or a threshold related to said one or several multicast and broadcast service flows of said multicast and broadcast service session is neared.

According to a variation of the procedure shown in Figure 7, exemplary details of the determining operation are given, which are inherently independent from each other as such. Such exemplary determining operation according to example embodiments may comprise an operation of monitoring said sequence numbers corresponding to said one or several multicast and broadcast service flows of said multicast and broadcast service session, an operation of calculating a sum of said sequence numbers corresponding to said one or several multicast and broadcast service flows of said multicast and broadcast service session, and an operation of comparing said sum with said maximum of said counter or said threshold.

According to a variation of the procedure shown in Figure 7, exemplary details of the determining operation are given, which are inherently independent from each other as such. Such exemplary determining operation according to example embodiments may comprise an operation of receiving, from a session management function entity in said mobile network, mapping information on multicast and broadcast service flows mapped to one or several multicast and broadcast service radio bearer and determining the said one or several multicast and broadcast service flows out of all multicast and broadcast service flows of said multicast and broadcast service session to be the flows mapped to the same multicast and broadcast service radio bearer, an operation of monitoring said sequence numbers corresponding to said multicast and broadcast service flows mapped to said multicast and broadcast service radio bearer, an operation of calculating a sum of said sequence numbers corresponding to said multicast and broadcast service flows mapped to said multicast and broadcast service radio bearer, and an operation of comparing said sum with said maximum of said counter or said threshold.

According to a variation of the procedure shown in Figure 7, exemplary details of the determining operation are given, which are inherently independent from each other as such. Such exemplary determining operation according to example embodiments may comprise an operation of receiving, from a session management function entity in said mobile network, reset suggestion information indicative of that a maximum of a counter related to said multicast and broadcast service radio bearer of said multicast and broadcast service session is neared and indicative of said one or several multicast and broadcast service flows.

According to a variation of the procedure shown in Figure 7, exemplary additional operations are given, which are inherently independent from each other as such. According to such variation, an exemplary method according to example embodiments may comprise an operation of detecting inactivity of said multicast and broadcast service session, and an operation of initiating, upon said inactivity, said resetting.

According to a variation of the procedure shown in Figure 7, exemplary additional operations are given, which are inherently independent from each other as such. According to such variation, an exemplary method according to example embodiments may comprise an operation of transmitting, towards a session management function entity in said mobile network, information indicative of that said maximum of said counter or said threshold related to said one or several multicast and broadcast service flows of said multicast and broadcast service session is neared, an operation of receiving, from said session management function entity in said mobile network, reset trigger information, and an operation of initiating, upon said reset trigger information, said resetting.

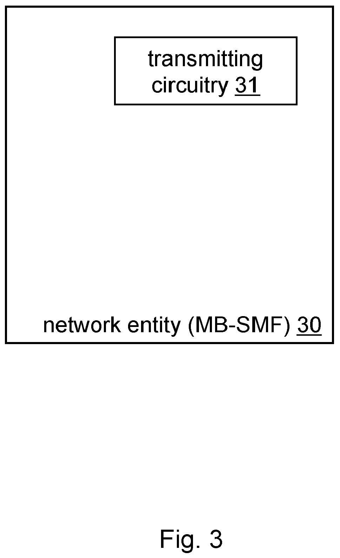

Figure 3 is a block diagram illustrating an apparatus according to example embodiments. The apparatus may be a network node or entity 30 such as a multicast broadcast session management function entity (or a network node or entity embodying such functionality) in a mobile network comprising a transmitting circuitry 31.

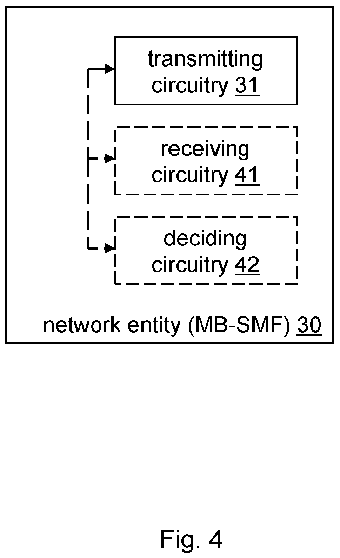

Figure 4 is a block diagram illustrating an apparatus according to example embodiments. In particular, Figure 4 illustrates a variation of the apparatus shown in Figure 3. The apparatus according to Figure 4 may thus further comprise a receiving circuitry 41 and/or a deciding circuitry 42.

In an embodiment at least some of the functionalities of the apparatus shown in Figure 3 (or 4) may be shared between two physically separate devices forming one operational entity. Therefore, the apparatus may be seen to depict the operational entity comprising one or more physically separate devices for executing at least some of the described processes.

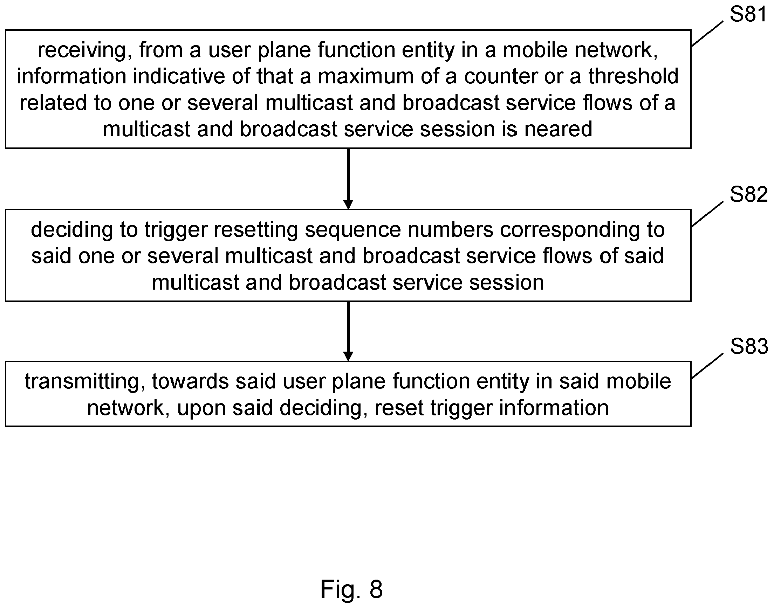

In an embodiment of the apparatus shown in Figure 3 (or 4), the receiving circuitry 41 receives, from a user plane function entity in said mobile network, information indicative of that a maximum of a counter or a threshold related to one or several multicast and broadcast service flows of a multicast and broadcast service session is neared. The deciding circuitry 42 decides to trigger resetting sequence numbers corresponding to said one or several multicast and broadcast service flows of said multicast and broadcast service session. The transmitting circuitry 31 transmits, towards said user plane function entity in said mobile network, upon said deciding, reset trigger information. Figure 8 is a schematic diagram of a procedure according to example embodiments. The apparatus according to Figure 3 (or 4) may perform the method of Figure 8 but is not limited to this method. The method of Figure 8 may be performed by the apparatus of Figure 3 (or 4) but is not limited to being performed by this apparatus.

As shown in Figure 8, a procedure according to example embodiments comprises an operation of receiving (S81), from a user plane function entity in said mobile network, information indicative of that a maximum of a counter or a threshold related to one or several multicast and broadcast service flows of a multicast and broadcast service session is neared, an operation of deciding (S82) to trigger resetting sequence numbers corresponding to said one or several multicast and broadcast service flows of said multicast and broadcast service session, and an operation of transmitting (S83), towards said user plane function entity in said mobile network, upon said deciding, reset trigger information.

According to further example embodiments, said deciding is related to a decision or received information of said multicast and broadcast service session getting deactivated.

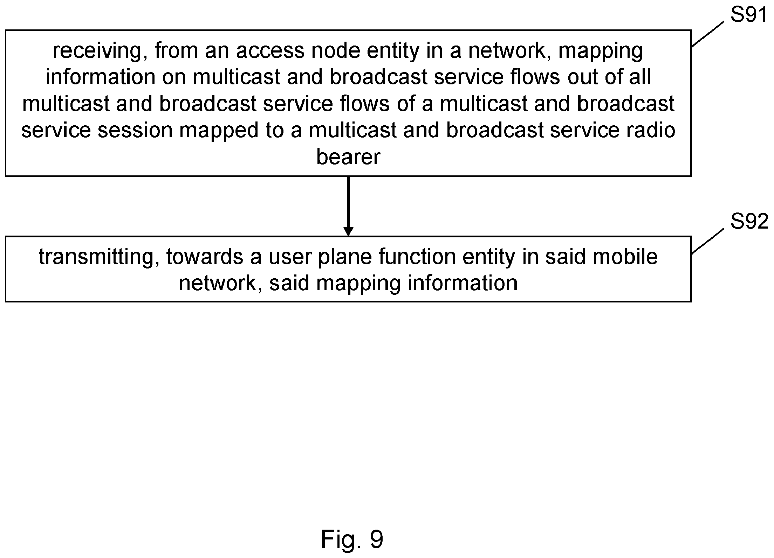

In another embodiment of the apparatus shown in Figure 3 (or 4), the receiving circuitry 41 receives, from an access node entity in said network, mapping information on multicast and broadcast service flows out of all multicast and broadcast service flows of a multicast and broadcast service session mapped to a multicast and broadcast service radio bearer. The transmitting circuitry 31 transmits, towards a user plane function entity in said mobile network, said mapping information. Figure 9 is a schematic diagram of a procedure according to example embodiments. The apparatus according to Figure 3 (or 4) may perform the method of Figure 9 but is not limited to this method. The method of Figure 9 may be performed by the apparatus of Figure 3 (or 4) but is not limited to being performed by this apparatus.

As shown in Figure 9, a procedure according to example embodiments comprises an operation of receiving (S91), from an access node entity in said network, mapping information on multicast and broadcast service flows out of all multicast and broadcast service flows of a multicast and broadcast service session mapped to a multicast and broadcast service radio bearer, and an operation of transmitting (S92), towards a user plane function entity in said mobile network, said mapping information.

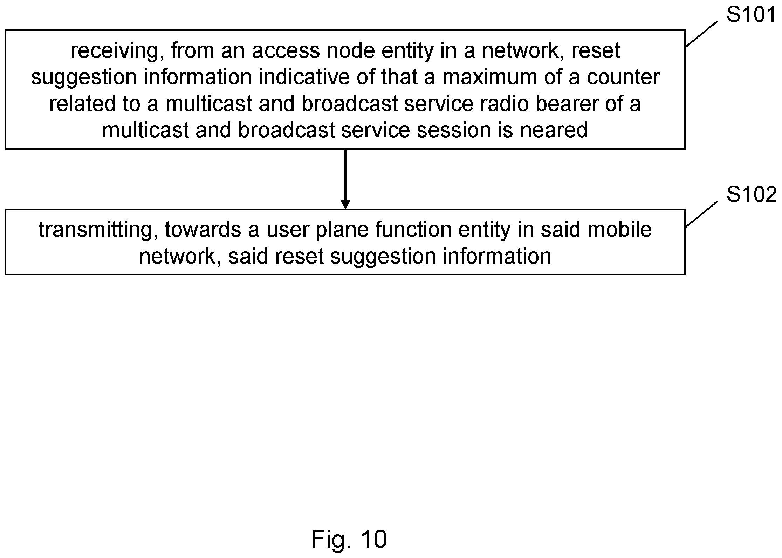

In another embodiment of the apparatus shown in Figure 3 (or 4), the receiving circuitry 41 receives, from an access node entity in said network, reset suggestion information indicative of that a maximum of a counter related to a multicast and broadcast service radio bearer of a multicast and broadcast service session is neared. The transmitting circuitry 31 transmits, towards a user plane function entity in said mobile network, said reset suggestion information. Figure 10 is a schematic diagram of a procedure according to example embodiments. The apparatus according to Figure 3 (or 4) may perform the method of Figure 10 but is not limited to this method. The method of Figure 10 may be performed by the apparatus of Figure 3 (or 4) but is not limited to being performed by this apparatus.

As shown in Figure 10, a procedure according to example embodiments comprises an operation of receiving (S101), from an access node entity in said network, reset suggestion information indicative of that a maximum of a counter related to a multicast and broadcast service radio bearer of a multicast and broadcast service session is neared, and an operation of transmitting (S102), towards a user plane function entity in said mobile network, said reset suggestion information.

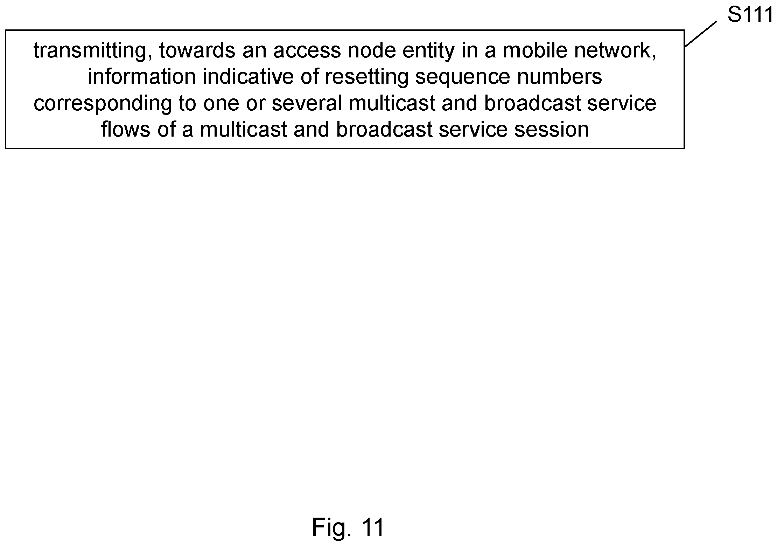

In another embodiment of the apparatus shown in Figure 3 (or 4), the transmitting circuitry 31 transmits, towards an access node entity in said mobile network, information indicative of resetting sequence numbers corresponding to one or several multicast and broadcast service flows of a multicast and broadcast service session. Figure 11 is a schematic diagram of a procedure according to example embodiments. The apparatus according to Figure 3 (or 4) may perform the method of Figure 11 but is not limited to this method. The method of Figure 11 may be performed by the apparatus of Figure 3 (or 4) but is not limited to being performed by this apparatus.

As shown in Figure 11, a procedure according to example embodiments comprises an operation of transmitting (S111), towards an access node entity in said mobile network, information indicative of resetting sequence numbers corresponding to one or several multicast and broadcast service flows of a multicast and broadcast service session.

According to a variation of the procedure shown in Figure 11, exemplary additional operations are given, which are inherently independent from each other as such. According to such variation, an exemplary method according to example embodiments may comprise an operation of receiving, from a user plane function entity in said network, said information indicative of said resetting sequence numbers corresponding to said one or several multicast and broadcast service flows.

According to further example embodiments, said access node entity in said mobile network is an access node entity managing said multicast and broadcast service session.

According to further example embodiments, said information indicative of said resetting is transmitted at a time of a deactivation of said multicast and broadcast service session.

According to further example embodiments, said information indicative of said resetting is transmitted at a time of a activation of said multicast and broadcast service session.

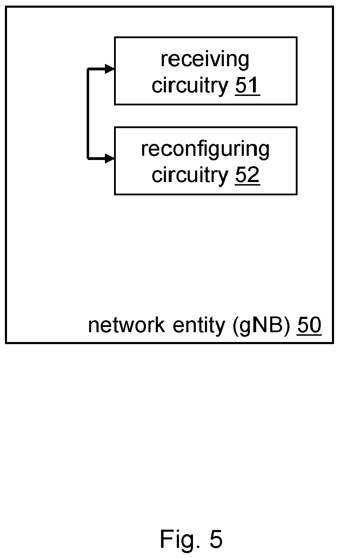

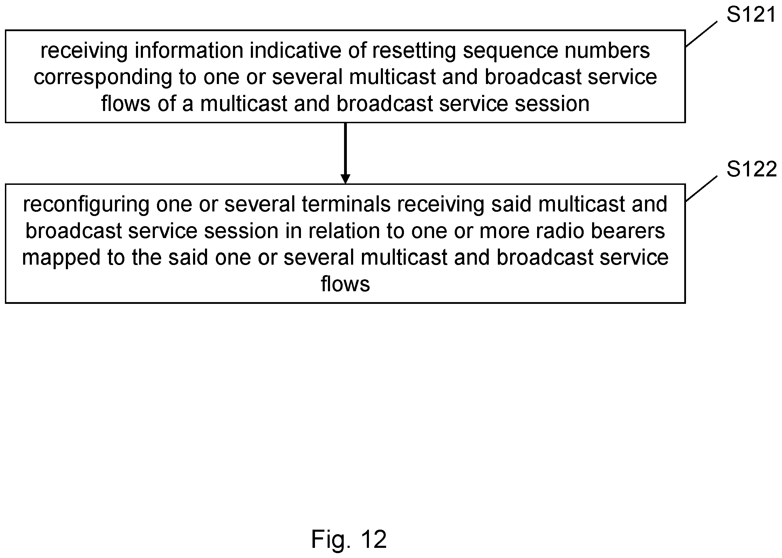

Figure 5 is a block diagram illustrating an apparatus according to example embodiments. The apparatus may be a network node or entity 50 such as a base station or access node entity (or a network node or entity embodying such functionality) in a mobile network comprising a receiving circuitry 51 and a reconfiguring circuitry 52. The receiving circuitry 51 receives information indicative of resetting sequence numbers corresponding to one or several multicast and broadcast service flows of a multicast and broadcast service session. The reconfiguring circuitry 52 reconfigures one or several terminals receiving said multicast and broadcast service session in relation to one or more radio bearers mapped to the said one or several multicast and broadcast service flows. Figure 12 is a schematic diagram of a procedure according to example embodiments. The apparatus according to Figure 5 may perform the method of Figure 12 but is not limited to this method. The method of Figure 12 may be performed by the apparatus of Figure 5 but is not limited to being performed by this apparatus.

As shown in Figure 12, a procedure according to example embodiments comprises an operation of receiving (S121) information indicative of resetting sequence numbers corresponding to one or several multicast and broadcast service flows of a multicast and broadcast service session, and an operation of reconfiguring (S122) one or several terminals receiving said multicast and broadcast service session in relation to one or more radio bearers mapped to the said one or several multicast and broadcast service flows.

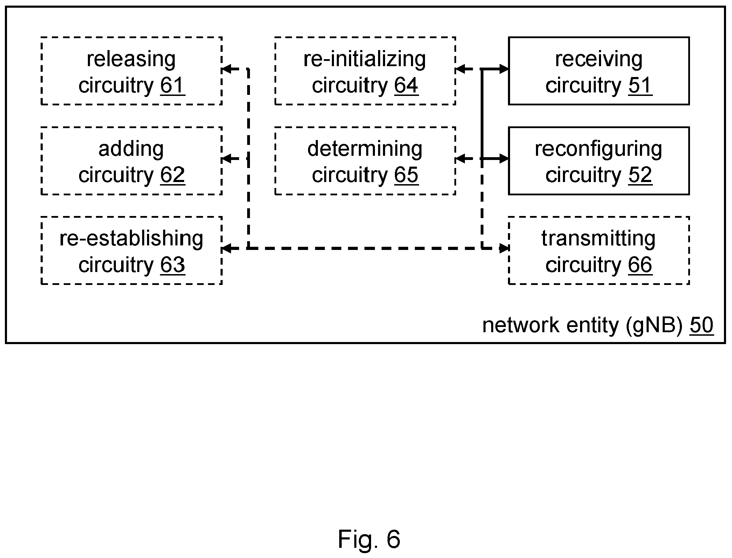

Figure 6 is a block diagram illustrating an apparatus according to example embodiments. In particular, Figure 6 illustrates a variation of the apparatus shown in Figure 5. The apparatus according to Figure 6 may thus further comprise a releasing circuitry 61, an adding circuitry 62, a re-establishing circuitry 63, a re-initializing circuitry 64, a determining circuitry 65, and/or a transmitting circuitry 66.

In an embodiment at least some of the functionalities of the apparatus shown in Figure 5 (or 6) may be shared between two physically separate devices forming one operational entity. Therefore, the apparatus may be seen to depict the operational entity comprising one or more physically separate devices for executing at least some of the described processes. Such shared architecture may comprise e.g. a gNB centralized unit control plane entity and a gNB centralized unit user plane entity.

According to further example embodiments, said information indicative of resetting sequence numbers is received together with information indicative of deactivation or activation of said multicast and broadcast service session.

According to a variation of the procedure shown in Figure 12, exemplary details of the reconfiguring operation (S122) are given, which are inherently independent from each other as such. Such exemplary reconfiguring operation (S122) according to example embodiments may comprise an operation of releasing a multicast and broadcast service radio bearer of said multicast and broadcast service session, and adding a new multicast and broadcast service radio bearer for said multicast and broadcast service session, and/or an operation of re-establishing a packet data convergence protocol in relation to a multicast and broadcast service radio bearer of said multicast and broadcast service session, and/or an operation of re-initializing a counter related to said multicast and broadcast service radio bearer of said multicast and broadcast service session.

According to a variation of the procedure shown in Figure 12, exemplary additional operations are given, which are inherently independent from each other as such. According to such variation, an exemplary method according to example embodiments may comprise an operation of determining a mapping of multicast and broadcast service flows out of said all multicast and broadcast service flows of said multicast and broadcast service session mapped to one or several multicast and broadcast service radio bearers, and an operation of transmitting, towards a session management function entity in said network, mapping information on said mapping.

According to a variation of the procedure shown in Figure 12, exemplary additional operations are given, which are inherently independent from each other as such. According to such variation, an exemplary method according to example embodiments may comprise an operation of determining that a maximum or a threshold of a counter related to said multicast and broadcast service radio bearer of said multicast and broadcast service session is neared, and an operation of transmitting, towards a session management function entity in said network, reset suggestion information indicative of that said maximum or threshold of said counter is neared.

According to further example embodiments, said information indicative of resetting sequence numbers corresponding to said multicast and broadcast service flows mapped to said multicast and broadcast service radio bearer is received from a session management function entity in said network.

According to further example embodiments, said information indicative of resetting sequence numbers corresponding to said multicast and broadcast service flows mapped to said multicast and broadcast service radio bearer is received from a user plane function entity in said network.

Example embodiments outlined and specified above are explained below in more specific terms.

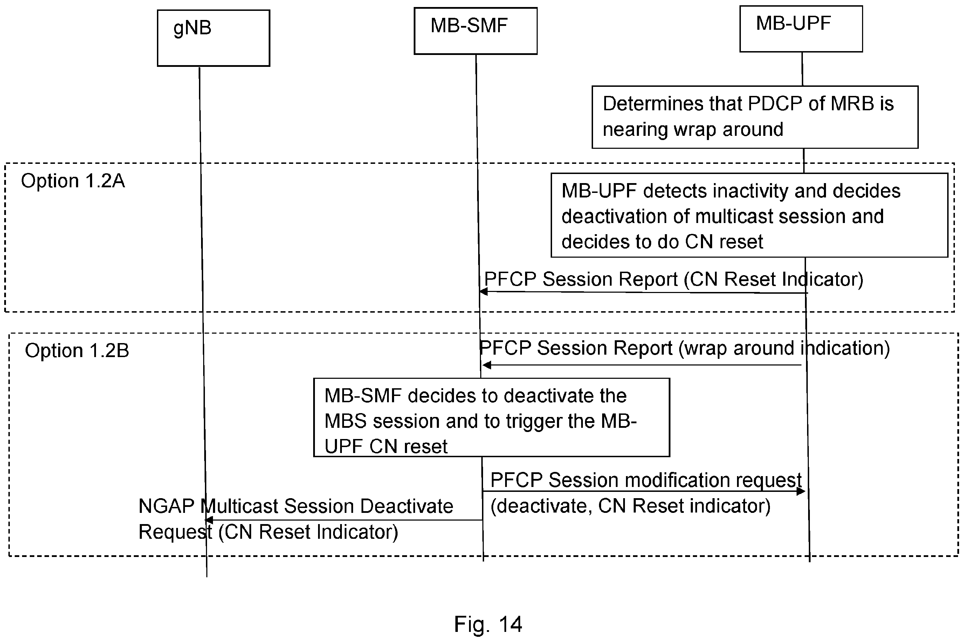

Figure 14 shows a schematic diagram of signaling sequences according to example embodiments, and in particular illustrates an example decision process for CN reset (of MBS QFI SN of MBS QoS flows) between MB-SMF and MB-UPF according to example embodiments.

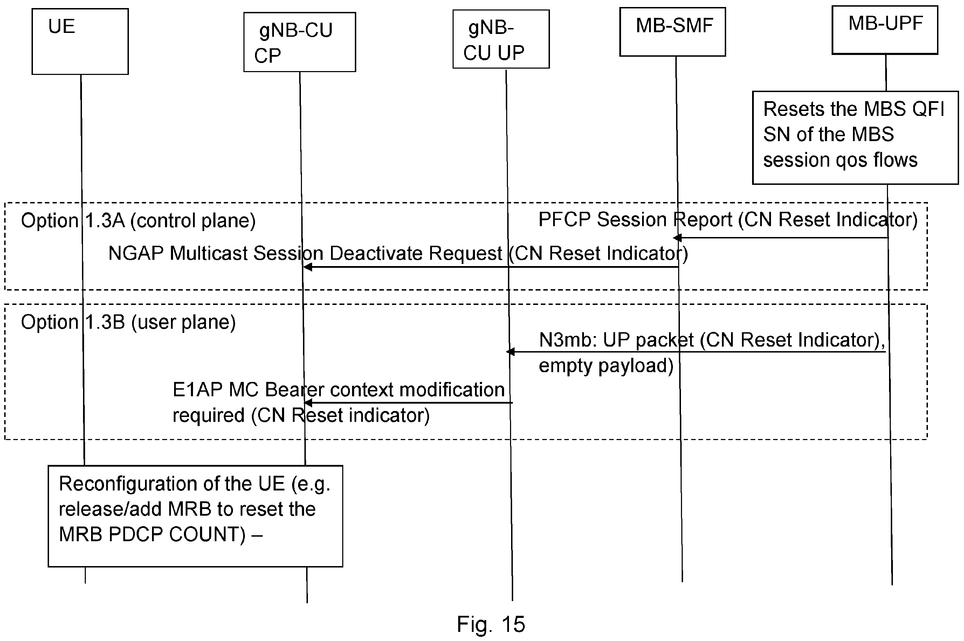

Figure 15 shows a schematic diagram of signaling sequences according to example embodiments, and in particular illustrates an example process including informing of gNB by MB-UPF/MB-SMF about CN reset performed according to example embodiments.

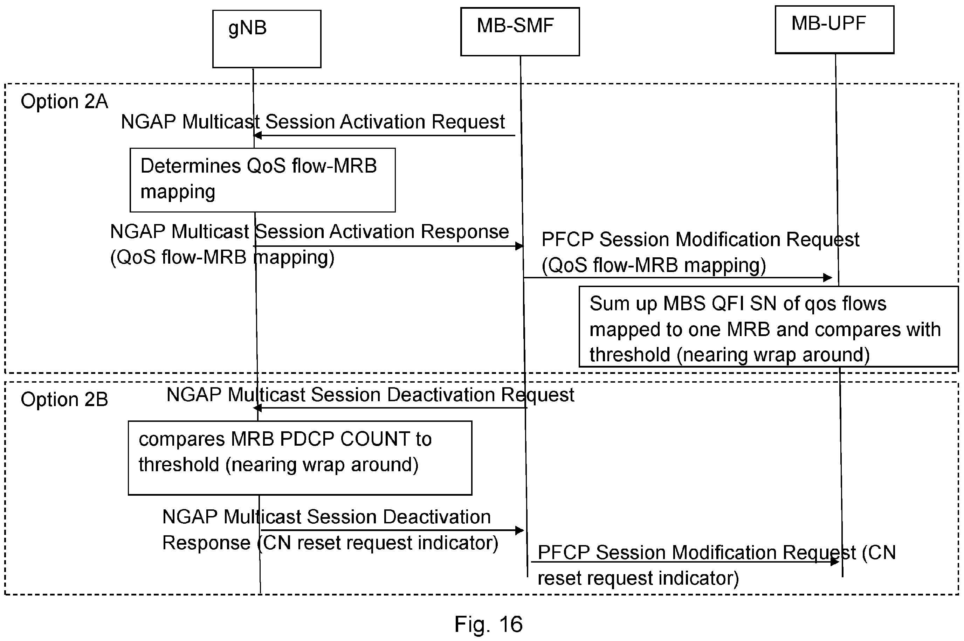

Figure 16 shows a schematic diagram of signaling sequences according to example embodiments, and in particular illustrates an example process including assistance information sent by gNB to help MB-UPF to determine the PDCP COUNT nearing wrap around according to example embodiments.

According to example embodiments, MB-UPF and MB-SMF decide when to reset the MBS QFI SNs of MBS QoS flows. Then, MB-UPF and MB-SMF inform the gNB(s) of the performed reset.

According to example embodiments, this decision is based on the determination that SNs of PDCP of MRB(s) associated with the multicast session are reaching or nearing the PDCP COUNT wrap around (i.e. maximum value supported by the PDCP encoding) or a configured threshold on the radio side, and/or based on information that the MBS session is being deactivated.

In an aspect 1.1, according to example embodiments, the MB-UPF first determines that the SN(s) of PDCP of MRB(s) associated with the multicast session are reaching or nearing the PDCP wrap around.

The determination of the MB-UPF can be based for example,
- Option 1.1A: on an implementation specific algorithm based on monitoring the MBS QFI SN of the MBS QoS flows associated with the MBS session (e.g. MB-UPF assuming that all MBS QoS flows of the MBS session map to the same MRB, the MB-UPF computes a virtual PDCP COUNT by summing up the MBS QFI SN of all the QoS flows), or
- Option 1.1B: on assistance information received from the gNB via MB-SMF (for example, but not limited to, in combination with options 2A or 2B of aspect 2 below).

In an aspect 1.2, according to example embodiments, once the MB-UPF has determined that the SN(s) of PDCP of MRB(s) associated with the multicast session are nearing wrap around, the related interactions between MB-SMF and MB-UPF vary according to the options 1.2A and 1.2B described below.
- Option 1.2A: The MB-UPF executes on its own the reset of the MBS QFI SN of the MBS QoS flows (CN reset) at appropriate time, e.g. at time of deactivation of the multicast session. This can especially apply when the MB-UPF is in mode of detecting the inactivity of the MBS session (for deactivation or for long data pause) and the MB-UPF triggers the CN reset when it detects the deactivation.
- Option 1.2B: The MB-UPF informs the MB-SMF of the PDCP COUNT nearing wrap around and the MB-SMF subsequently triggers at appropriate time the MB-UPF to execute the CN reset. This can especially apply when the deactivation is decided by the MB-SMF, i.e. after the MB-SMF has been informed that the MB-UPF has determined that PDCP COUNT wrap around is nearing, the MB-SMF at next deactivation time sends the trigger reset order to MB-UPF within the next deactivation request message together with the stop/buffer data request associated with the deactivation request.

According to example embodiments, the execution of CN reset in MB-UPF consists in MB-UPF setting the MBS QFI SN of all MBS QoS flows of the multicast session to zero.

In an aspect 1.3, according to example embodiments, the MB-UPF then informs the gNB of the performed CN reset according to the options 1.3A to 1.3C described below.
- Option 1.3A: The MB-UPF newly informs the MB-SMF of the performed reset of the MBS QFI SN of all QoS flows of the MBS session by newly including a Reset Indicator in the PFCP session modification response or establishment response message or a in a PFCP session report request to MB-SMF. Then, the MB-SMF newly includes a Reset Indicator in the multicast session deactivation request transfer IE contained in the multicast session deactivation request NGAP message which is sent to the gNB or an NGAP multicast session update message. Alternatively, the MB-SMF sends the Reset Indicator to the gNB in any other message.
- Option 1.3B: The MB-UPF sends a packet with empty payload including a Reset Indicator over N3mb interface for at least one of the QoS flows involved in the MBS session. If the gNB is split, the gNB-CU UP transfers this information to the gNB-CU CP over E1AP interface.
- Option 1.3C: The Reset Indicator is included at time of subsequent activation (following the deactivation) either in the NGAP activation request message or via user plane in the first packet sent by MB-UPF over N3mb. In this case, the gNB starts by buffering first packets until procedures explained with aspect 3 are done.

In an aspect 2, according to example embodiments, assistance information is sent by gNB to help MB-UPF determination that PDCP COUNT wrap around is nearing on the radio (for example, but not limited to, in combination with option 1.1B of aspect 1.1 above). This may be conducted based on any of the options 2A and 2B described below.

### Option 2A:

After gNB has decided the QoS flow-MRB mapping to apply for the MBS session, the gNB informs the MB-SMF of the QoS flow-MRB mapping decided by gNB either:
- by newly including the QoS flow-MRB mapping in the activation response message or MBS session update response, or
- by newly including the QoS flow-MRB mapping information in any other message or NGAP container sent from gNB to MB-SMF.

Then the MB-SMF informs the MB-UPF of the QoS flow-MRB mapping either:
- by including the QoS flow-MRB mapping in the PFCP_session_modification_request message (or in a PFCP session establishment request, e.g. for restoration scenarios), or
- by newly including the QoS flow-MRB mapping information in any other message from MB-SMF to MB-UPF.

Based on the QoS flow-MRB mapping information, the MB-UPF can compute at any point in time the PDCP COUNT of any MRB of the multicast session by summing up the MBS QFI SN of all QoS flows which are mapped onto that MRB and then determine when the PDCP COUNT of that MRB is going to wrap around in a near future.

### Option 2B:

The gNB determines itself by monitoring that the PDCP COUNT is approaching wrap around the appropriate time for requesting or suggesting a CN reset action from the MB-UPF.

The gNB informs the MB-SMF of the suggestion or request to CN reset either:
- by newly including the Reset Request Indicator in a NGAP deactivation response message, or
- by newly including the Reset Request Indicator in any other message from gNB to MB-SMF.

Then the MB-SMF informs the MB-UPF of the CN reset suggestion or request from gNB either:
- by newly including the Reset Request Indicator in the PFCP_session_modification_request message (or in a PFCP session establishment request message, e.g. for restoration scenarios), or
- by newly including the Reset Request Indicator in any other message from MB-SMF to MB-UPF.

In an aspect 2, according to example embodiments, upon receiving the Reset Indicator, the gNB re-initializes the PDCP COUNT (for example, but not limited to, in combination with and/or dependent on aspects 1.1 to 1.3 above).

Upon receiving the Reset Indicator e.g. with one of the means described above, the gNB initiates the reset of the PDCP COUNT for both UEs resuming from RRC_INACTIVE and UEs staying in RRC_CONNECTED either immediately or at appropriate time as follows:
- CONNECTED UE does not know when MBS multicast session is deactivated, thus UE continues monitoring G-RNTI unless the MRB is released
   o when CN indicates that CN SN is reset when the deactivated MBS multicast session is activated, gNB sends RRCReconfiguration message to UEs in RRC_CONNECTED where MRB can be released and a new MRB added (resets COUNT), this should preferably be done before the MBS multicast session is activated,
- if the UE is released to INACTIVE, MRB could be released before it or if not released UE suspends MRBs
   ∘ when UE resumes, MRB can be released (if not done earlier) and a new added,
   o for UM MRB, also MRB resume works since PDCP can be reestablished which for UM MRB initializes PDCP state variables,
- for AM MRB, currently only release/add would work, but alternatively, according to example embodiment, PDCP re-establishment can be updated to allow initialization of state variables.

According to example embodiments, advantageously, PDCP COUNT wrap around is avoided, and associated release of all MRBs for the UE is avoided as well.

For options 1.3A and 1.3B, advantageously, indication of CN reset to gNB at the moment when MBS session is deactivated is enabled, which allows the gNB to know before data resume that it should release/add the MRB and there is time to do it while the MBS session is deactivated. If, instead, the gNB would learn the CN SN reset only when the session is activated, there may be considerable delay in activation since gNB has to reconfigure all UEs receiving the MBS multicast session.

The above-described procedures and functions may be implemented by respective functional elements, processors, or the like, as described below.

In the foregoing exemplary description of the network entity, only the units that are relevant for understanding the principles of the disclosure have been described using functional blocks. The network entity may comprise further units that are necessary for its respective operation. However, a description of these units is omitted in this specification. The arrangement of the functional blocks of the devices is not construed to limit the disclosure, and the functions may be performed by one block or further split into sub-blocks.

When in the foregoing description it is stated that the apparatus, i.e. network entity (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is construed to be equivalent to an expression such as "means for").

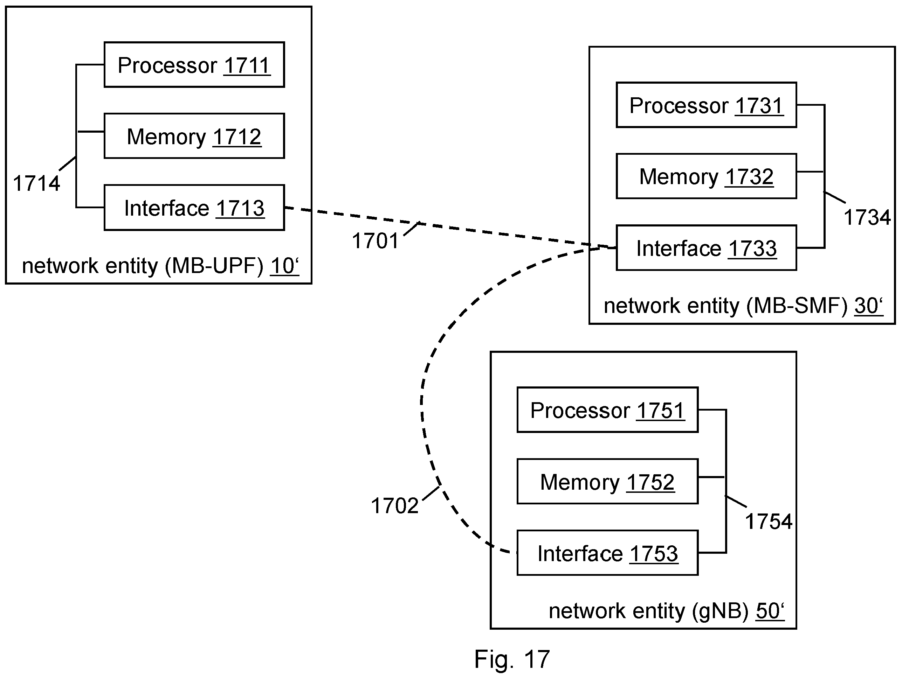

In Figure 17, an alternative illustration of apparatuses according to example embodiments is depicted. As indicated in Figure 17, according to example embodiments, the apparatus (network node or entity) 10' (corresponding to the network node or entity 10) comprises a processor 1711, a memory 1712 and an interface 1713, which are connected by a bus 1714 or the like. Further, according to example embodiments, the apparatus (network node or entity) 30' (corresponding to the network node or entity 30) comprises a processor 1731, a memory 1732 and an interface 1733, which are connected by a bus 1734 or the like. Further, according to example embodiments, the apparatus (network node or entity) 50' (corresponding to the network node or entity 50) comprises a processor 1751, a memory 1752 and an interface 1753, which are connected by a bus 1754 or the like. The apparatuses may be connected via links 1701, 1702, respectively.

The processor 1711/1731/1751 and/or the interface 1713/1733/1753 may also include a modem or the like to facilitate communication over a (hardwire or wireless) link, respectively. The interface 1713/1733/1753 may include a suitable transceiver coupled to one or more antennas or communication means for (hardwire or wireless) communications with the linked or connected device(s), respectively. The interface 1713/1733/1753 is generally configured to communicate with at least one other apparatus, i.e. the interface thereof.

The memory 1712/1732/1752 may store respective programs assumed to include program instructions or computer program code that, when executed by the respective processor, enables the respective electronic device or apparatus to operate in accordance with the example embodiments.

In general terms, the respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

When in the subsequent description it is stated that the processor (or some other means) is configured to perform some function, this is to be construed to be equivalent to a description stating that at least one processor, potentially in cooperation with computer program code stored in the memory of the respective apparatus, is configured to cause the apparatus to perform at least the thus mentioned function. Also, such function is to be construed to be equivalently implementable by specifically configured means for performing the respective function (i.e. the expression "processor configured to [cause the apparatus to] perform xxx-ing" is construed to be equivalent to an expression such as "means for xxx-ing").

According to example embodiments, an apparatus representing the network node or entity 10 (in a mobile network) comprises at least one processor 1711, at least one memory 1712 including computer program code, and at least one interface 1713 configured for communication with at least another apparatus. The processor (i.e. the at least one processor 1711, with the at least one memory 1712 and the computer program code) is configured to perform resetting sequence numbers corresponding to one or several multicast and broadcast service flows out of all multicast and broadcast service flows of a multicast and broadcast service session (thus the apparatus comprising corresponding means for resetting), and to perform transmitting information indicative of said resetting (thus the apparatus comprising corresponding means for transmitting).

According to example embodiments, an apparatus representing the network node or entity 30 (in a mobile network) comprises at least one processor 1731, at least one memory 1732 including computer program code, and at least one interface 1733 configured for communication with at least another apparatus. The processor (i.e. the at least one processor 1731, with the at least one memory 1732 and the computer program code) is configured to perform receiving, from a user plane function entity in said mobile network, information indicative of that a maximum of a counter or a threshold related to one or several multicast and broadcast service flows of a multicast and broadcast service session is neared (thus the apparatus comprising corresponding means for receiving), to perform deciding to trigger resetting sequence numbers corresponding to said one or several multicast and broadcast service flows of said multicast and broadcast service session (thus the apparatus comprising corresponding means for deciding), and to perform transmitting, towards said user plane function entity in said mobile network, upon said deciding, reset trigger information (thus the apparatus comprising corresponding means for transmitting).

According to example embodiments, an apparatus representing the network node or entity 30 (in a mobile network) comprises at least one processor 1731, at least one memory 1732 including computer program code, and at least one interface 1733 configured for communication with at least another apparatus. The processor (i.e. the at least one processor 1731, with the at least one memory 1732 and the computer program code) is configured to perform receiving, from an access node entity in said network, mapping information on multicast and broadcast service flows out of all multicast and broadcast service flows of a multicast and broadcast service session mapped to a multicast and broadcast service radio bearer (thus the apparatus comprising corresponding means for receiving), and to perform transmitting, towards a user plane function entity in said mobile network, said mapping information (thus the apparatus comprising corresponding means for transmitting).

According to example embodiments, an apparatus representing the network node or entity 30 (in a mobile network) comprises at least one processor 1731, at least one memory 1732 including computer program code, and at least one interface 1733 configured for communication with at least another apparatus. The processor (i.e. the at least one processor 1731, with the at least one memory 1732 and the computer program code) is configured to perform receiving, from an access node entity in said network, reset suggestion information indicative of that a maximum of a counter related to a multicast and broadcast service radio bearer of a multicast and broadcast service session is neared (thus the apparatus comprising corresponding means for receiving), and to perform transmitting, towards a user plane function entity in said mobile network, said reset suggestion information (thus the apparatus comprising corresponding means for transmitting).

According to example embodiments, an apparatus representing the network node or entity 30 (in a mobile network) comprises at least one processor 1731, at least one memory 1732 including computer program code, and at least one interface 1733 configured for communication with at least another apparatus. The processor (i.e. the at least one processor 1731, with the at least one memory 1732 and the computer program code) is configured to perform transmitting, towards an access node entity in said mobile network, information indicative of resetting sequence numbers corresponding to one or several multicast and broadcast service flows of a multicast and broadcast service session (thus the apparatus comprising corresponding means for transmitting).

According to example embodiments, an apparatus representing the network node or entity 50 (in a mobile network) comprises at least one processor 1751, at least one memory 1752 including computer program code, and at least one interface 1753 configured for communication with at least another apparatus. The processor (i.e. the at least one processor 1751, with the at least one memory 1752 and the computer program code) is configured to perform receiving information indicative of resetting sequence numbers corresponding to one or several multicast and broadcast service flows of a multicast and broadcast service session (thus the apparatus comprising corresponding means for receiving), and to perform reconfiguring one or several terminals receiving said multicast and broadcast service session in relation to one or more radio bearers mapped to the said one or several multicast and broadcast service flows (thus the apparatus comprising corresponding means for reconfiguring).

For further details regarding the operability/functionality of the individual apparatuses, reference is made to the above description in connection with any one of Figures 1 to 16, respectively.

For the purpose of the present disclosure as described herein above, it should be noted that
- method steps likely to be implemented as software code portions and being run using a processor at a network server or network entity (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
- devices, units or means (e.g. the above-defined network entity or network register, or any one of their respective units/means) can be implemented as individual devices, units or means, but this does not exclude that they are implemented in a distributed fashion throughout the system, as long as the functionality of the device, unit or means is preserved;
- an apparatus like the user equipment and the network entity /network register may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present disclosure. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present disclosure also covers any conceivable combination of method steps and operations described above, and any conceivable combination of nodes, apparatuses, modules or elements described above, as long as the above-described concepts of methodology and structural arrangement are applicable.

In view of the above, there are provided measures for improvement of multicast and broadcast services in mobile scenarios. Such measures exemplarily comprise, at a user plane function entity in a mobile network, resetting sequence numbers corresponding to one or several multicast and broadcast service flows out of all multicast and broadcast service flows of a multicast and broadcast service session, and transmitting information indicative of said resetting.

Even though the disclosure is described above with reference to the examples according to the accompanying drawings, it is to be understood that the disclosure is not restricted thereto. Rather, it is apparent to those skilled in the art that the present disclosure can be modified in many ways without departing from the scope of the inventive idea as disclosed herein.

Among others, the following Items are covered by embodiments outlined, specified and/or explained above.

Item 1. A method of a user plane function entity in a mobile network, the method comprising
resetting sequence numbers corresponding to one or several multicast and broadcast service flows out of all multicast and broadcast service flows of a multicast and broadcast service session, and
transmitting information indicative of said resetting.

Item 2. The method according to Item 1, wherein
said information indicative of said resetting is transmitted towards a session management function entity in said mobile network, or wherein
said information indicative of said resetting is transmitted towards an access node entity in said mobile network.

Item 3. The method according to Item 2, wherein
said resetting is done at a time of a deactivation of said multicast and broadcast service session, or wherein
said resetting is done at a time of a subsequent activation of said multicast and broadcast service session.

Item 4. The method according to any of Items 1 to 3, further comprising
determining that a maximum of a counter or a threshold related to said one or several multicast and broadcast service flows of said multicast and broadcast service session is neared.

Item 5. The method according to Item 4, wherein
in relation to said determining, the method further comprises
monitoring said sequence numbers corresponding to said one or several multicast and broadcast service flows of said multicast and broadcast service session,
calculating a sum of said sequence numbers corresponding to said one or several multicast and broadcast service flows of said multicast and broadcast service session, and
comparing said sum with said maximum of said counter or said threshold.

Item 6. The method according to any of Item 4, wherein
in relation to said determining, the method further comprises
receiving, from a session management function entity in said mobile network, mapping information on multicast and broadcast service flows mapped to one or several multicast and broadcast service radio bearer and determining the said one or several multicast and broadcast service flows out of all multicast and broadcast service flows of said multicast and broadcast service session to be the flows mapped to the same multicast and broadcast service radio bearer,
monitoring said sequence numbers corresponding to said multicast and broadcast service flows mapped to said multicast and broadcast service radio bearer,
calculating a sum of said sequence numbers corresponding to said multicast and broadcast service flows mapped to said multicast and broadcast service radio bearer, and
comparing said sum with said maximum of said counter or said threshold.

Item 7. The method according to Item 4, wherein
in relation to said determining, the method further comprises
receiving, from a session management function entity in said mobile network, reset suggestion information indicative of that a maximum of a counter related to said multicast and broadcast service radio bearer of said multicast and broadcast service session is neared and indicative of said one or several multicast and broadcast service flows.

Item 8. The method according to any of Items 1 to 7, further comprising
detecting inactivity of said multicast and broadcast service session, and initiating, upon said inactivity, said resetting, or further comprising
transmitting, towards a session management function entity in said mobile network, information indicative of that said maximum of said counter or said threshold related to said one or several multicast and broadcast service flows of said multicast and broadcast service session is neared,
receiving, from said session management function entity in said mobile network, reset trigger information, and
initiating, upon said reset trigger information, said resetting.

Item 9. A method of a session management function entity in a mobile network, the method comprising
receiving, from a user plane function entity in said mobile network, information indicative of that a maximum of a counter or a threshold related to one or several multicast and broadcast service flows of a multicast and broadcast service session is neared,
deciding to trigger resetting sequence numbers corresponding to said one or several multicast and broadcast service flows of said multicast and broadcast service session, and
transmitting, towards said user plane function entity in said mobile network, upon said deciding, reset trigger information.

Item 10. The method according to Item 9, wherein
said deciding is related to a decision or received information of said multicast and broadcast service session getting deactivated.

Item 11. A method of a session management function entity in a mobile network, the method comprising
receiving, from an access node entity in said network, mapping information on multicast and broadcast service flows out of all multicast and broadcast service flows of a multicast and broadcast service session mapped to a multicast and broadcast service radio bearer, and
transmitting, towards a user plane function entity in said mobile network, said mapping information.

Item 12. A method of a session management function entity in a mobile network, the method comprising
receiving, from an access node entity in said network, reset suggestion information indicative of that a maximum of a counter related to a multicast and broadcast service radio bearer of a multicast and broadcast service session is neared, and
transmitting, towards a user plane function entity in said mobile network, said reset suggestion information.

Item 13. A method of a session management function entity in a mobile network, the method comprising
transmitting, towards an access node entity in said mobile network, information indicative of resetting sequence numbers corresponding to one or several multicast and broadcast service flows of a multicast and broadcast service session.

Item 14. The method according to Item 13, further comprising
receiving, from a user plane function entity in said network, said information indicative of said resetting sequence numbers corresponding to said one or several multicast and broadcast service flows.

Item 15. The method according to Item 13 or 14, wherein
said access node entity in said mobile network is an access node entity managing said multicast and broadcast service session.

Item 16. The method according to any of Items 13 to 15, wherein
said information indicative of said resetting is transmitted at a time of a deactivation of said multicast and broadcast service session, or wherein
said information indicative of said resetting is transmitted at a time of a activation of said multicast and broadcast service session.

Item 17. A method of an access node entity in a mobile network, the method comprising
receiving information indicative of resetting sequence numbers corresponding to one or several multicast and broadcast service flows of a multicast and broadcast service session, and
reconfiguring one or several terminals receiving said multicast and broadcast service session in relation to one or more radio bearers mapped to the said one or several multicast and broadcast service flows.

Item 18. The method according to Item 17, wherein
said information indicative of resetting sequence numbers is received together with information indicative of deactivation or activation of said multicast and broadcast service session.

Item 19. The method according to Item 17 or 18, wherein
in relation to said reconfiguring, the method further comprises at least one of
releasing a multicast and broadcast service radio bearer of said multicast and broadcast service session, and adding a new multicast and broadcast service radio bearer for said multicast and broadcast service session,
re-establishing a packet data convergence protocol in relation to a multicast and broadcast service radio bearer of said multicast and broadcast service session, and
re-initializing a counter related to said multicast and broadcast service radio bearer of said multicast and broadcast service session.

Item 20. The method according to any of Items 17 to 19, further comprising
determining a mapping of multicast and broadcast service flows out of said all multicast and broadcast service flows of said multicast and broadcast service session mapped to one or several multicast and broadcast service radio bearers, and
transmitting, towards a session management function entity in said network, mapping information on said mapping.

Item 21. The method according to any of Items 17 to 19, further comprising
determining that a maximum or a threshold of a counter related to said multicast and broadcast service radio bearer of said multicast and broadcast service session is neared, and
transmitting, towards a session management function entity in said network, reset suggestion information indicative of that said maximum or threshold of said counter is neared.

Item 22. The method according to any of Items 17 to 21, wherein
said information indicative of resetting sequence numbers corresponding to said multicast and broadcast service flows mapped to said multicast and broadcast service radio bearer is received from a session management function entity in said network, or wherein
said information indicative of resetting sequence numbers corresponding to said multicast and broadcast service flows mapped to said multicast and broadcast service radio bearer is received from a user plane function entity in said network.

Item 23. An apparatus of a user plane function entity in a mobile network, the apparatus comprising
resetting circuitry configured to reset sequence numbers corresponding to one or several multicast and broadcast service flows out of all multicast and broadcast service flows of a multicast and broadcast service session, and
transmitting circuitry configured to transmit information indicative of said resetting.

Item 24. The apparatus according to Item 23, wherein
said information indicative of said resetting is transmitted towards a session management function entity in said mobile network, or wherein
said information indicative of said resetting is transmitted towards an access node entity in said mobile network.

Item 25. The apparatus according to Item 24, wherein
said resetting is done at a time of a deactivation of said multicast and broadcast service session, or wherein
said resetting is done at a time of a subsequent activation of said multicast and broadcast service session.

Item 26. The apparatus according to any of Items 23 to 25, further comprising
determining circuitry configured to determine that a maximum of a counter or a threshold related to said one or several multicast and broadcast service flows of said multicast and broadcast service session is neared.

Item 27. The apparatus according to Item 26, further comprising
monitoring circuitry configured to monitor said sequence numbers corresponding to said one or several multicast and broadcast service flows of said multicast and broadcast service session,
calculating circuitry configured to calculate a sum of said sequence numbers corresponding to said one or several multicast and broadcast service flows of said multicast and broadcast service session, and
comparing circuitry configured to compare said sum with said maximum of said counter or said threshold.

Item 28. The apparatus according to any of Item 26, further comprising
receiving circuitry configured to receive, from a session management function entity in said mobile network, mapping information on multicast and broadcast service flows mapped to one or several multicast and broadcast service radio bearer and determining the said one or several multicast and broadcast service flows out of all multicast and broadcast service flows of said multicast and broadcast service session to be the flows mapped to the same multicast and broadcast service radio bearer,
monitoring circuitry configured to monitor said sequence numbers corresponding to said multicast and broadcast service flows mapped to said multicast and broadcast service radio bearer,
calculating circuitry configured to calculate a sum of said sequence numbers corresponding to said multicast and broadcast service flows mapped to said multicast and broadcast service radio bearer, and
comparing circuitry configured to compare said sum with said maximum of said counter or said threshold.

Item 29. The apparatus according to Item 26, further comprising
receiving circuitry configured to receive, from a session management function entity in said mobile network, reset suggestion information indicative of that a maximum of a counter related to said multicast and broadcast service radio bearer of said multicast and broadcast service session is neared and indicative of said one or several multicast and broadcast service flows.

Item 30. The apparatus according to any of Items 23 to 29, further comprising
detecting circuitry configured to detect inactivity of said multicast and broadcast service session, and
initiating circuitry configured to initiate, upon said inactivity, said resetting, or further comprising
transmitting circuitry configured to transmit, towards a session management function entity in said mobile network, information indicative of that said maximum of said counter or said threshold related to said one or several multicast and broadcast service flows of said multicast and broadcast service session is neared,
receiving circuitry configured to receive, from said session management function entity in said mobile network, reset trigger information, and
initiating circuitry configured to initiate, upon said reset trigger information, said resetting.

Item 31. An apparatus of a session management function entity in a mobile network, the apparatus comprising
receiving circuitry configured to receive, from a user plane function entity in said mobile network, information indicative of that a maximum of a counter or a threshold related to one or several multicast and broadcast service flows of a multicast and broadcast service session is neared,
deciding circuitry configured to decide to trigger resetting sequence numbers corresponding to said one or several multicast and broadcast service flows of said multicast and broadcast service session, and
transmitting circuitry configured to transmit, towards said user plane function entity in said mobile network, upon said deciding, reset trigger information.

Item 32. The apparatus according to Item 31, wherein
said deciding is related to a decision or received information of said multicast and broadcast service session getting deactivated.

Item 33. An apparatus of a session management function entity in a mobile network, the apparatus comprising
receiving circuitry configured to receive, from an access node entity in said network, mapping information on multicast and broadcast service flows out of all multicast and broadcast service flows of a multicast and broadcast service session mapped to a multicast and broadcast service radio bearer, and
transmitting circuitry configured to transmit, towards a user plane function entity in said mobile network, said mapping information.

Item 34. An apparatus of a session management function entity in a mobile network, the apparatus comprising
receiving circuitry configured to receive, from an access node entity in said network, reset suggestion information indicative of that a maximum of a counter related to a multicast and broadcast service radio bearer of a multicast and broadcast service session is neared, and
transmitting circuitry configured to transmit, towards a user plane function entity in said mobile network, said reset suggestion information.

Item 35. An apparatus of a session management function entity in a mobile network, the apparatus comprising
transmitting circuitry configured to transmit, towards an access node entity in said mobile network, information indicative of resetting sequence numbers corresponding to one or several multicast and broadcast service flows of a multicast and broadcast service session.

Item 36. The apparatus according to Item 35, further comprising
receiving circuitry configured to receive, from a user plane function entity in said network, said information indicative of said resetting sequence numbers corresponding to said one or several multicast and broadcast service flows.

Item 37. The apparatus according to Item 35 or 36, wherein
said access node entity in said mobile network is an access node entity managing said multicast and broadcast service session.

Item 38. The apparatus according to any of Items 35 to 37, wherein
said information indicative of said resetting is transmitted at a time of a deactivation of said multicast and broadcast service session, or wherein
said information indicative of said resetting is transmitted at a time of a activation of said multicast and broadcast service session.

Item 39. An apparatus of an access node entity in a mobile network, the apparatus comprising
receiving circuitry configured to receive information indicative of resetting sequence numbers corresponding to one or several multicast and broadcast service flows of a multicast and broadcast service session, and
reconfiguring circuitry configured to reconfigure one or several terminals receiving said multicast and broadcast service session in relation to one or more radio bearers mapped to the said one or several multicast and broadcast service flows.

Item 40. The apparatus according to Item 39, wherein
said information indicative of resetting sequence numbers is received together with information indicative of deactivation or activation of said multicast and broadcast service session.

Item 41. The apparatus according to Item 39 or 40, further comprising at least one of
releasing circuitry configured to release a multicast and broadcast service radio bearer of said multicast and broadcast service session, and adding a new multicast and broadcast service radio bearer for said multicast and broadcast service session,
re-establishing circuitry configured to re-establish a packet data convergence protocol in relation to a multicast and broadcast service radio bearer of said multicast and broadcast service session, and
re-initializing circuitry configured to re-initialize a counter related to said multicast and broadcast service radio bearer of said multicast and broadcast service session.

Item 42. The apparatus according to any of Items 39 to 41, further comprising
determining circuitry configured to determine a mapping of multicast and broadcast service flows out of said all multicast and broadcast service flows of said multicast and broadcast service session mapped to one or several multicast and broadcast service radio bearers, and
transmitting circuitry configured to transmit, towards a session management function entity in said network, mapping information on said mapping.

Item 43. The apparatus according to any of Items 39 to 41, further comprising
determining circuitry configured to determine that a maximum or a threshold of a counter related to said multicast and broadcast service radio bearer of said multicast and broadcast service session is neared, and
transmitting circuitry configured to transmit, towards a session management function entity in said network, reset suggestion information indicative of that said maximum or threshold of said counter is neared.

Item 44. The apparatus according to any of Items 39 to 43, wherein
said information indicative of resetting sequence numbers corresponding to said multicast and broadcast service flows mapped to said multicast and broadcast service radio bearer is received from a session management function entity in said network, or wherein
said information indicative of resetting sequence numbers corresponding to said multicast and broadcast service flows mapped to said multicast and broadcast service radio bearer is received from a user plane function entity in said network.

Item 45. An apparatus of a user plane function entity in a mobile network, the apparatus comprising
at least one processor,
at least one memory including computer program code, and
at least one interface configured for communication with at least another apparatus,
the at least one processor, with the at least one memory and the computer program code, being configured to cause the apparatus to perform:
   resetting sequence numbers corresponding to one or several multicast and broadcast service flows out of all multicast and broadcast service flows of a multicast and broadcast service session, and
   transmitting information indicative of said resetting.

Item 46. The apparatus according to Item 45, wherein
said information indicative of said resetting is transmitted towards a session management function entity in said mobile network, or wherein
said information indicative of said resetting is transmitted towards an access node entity in said mobile network.

Item 47. The apparatus according to Item 46, wherein
said resetting is done at a time of a deactivation of said multicast and broadcast service session, or wherein
said resetting is done at a time of a subsequent activation of said multicast and broadcast service session.

Item 48. The apparatus according to any of Items 45 to 47, wherein
the at least one processor, with the at least one memory and the computer program code, being configured to cause the apparatus to perform:
determining that a maximum of a counter or a threshold related to said one or several multicast and broadcast service flows of said multicast and broadcast service session is neared.

Item 49. The apparatus according to Item 48, wherein
in relation to said determining, the at least one processor, with the at least one memory and the computer program code, being configured to cause the apparatus to perform:
monitoring said sequence numbers corresponding to said one or several multicast and broadcast service flows of said multicast and broadcast service session,
calculating a sum of said sequence numbers corresponding to said one or several multicast and broadcast service flows of said multicast and broadcast service session, and
comparing said sum with said maximum of said counter or said threshold.

Item 50. The apparatus according to any of Item 48, wherein
in relation to said determining, the at least one processor, with the at least one memory and the computer program code, being configured to cause the apparatus to perform:
receiving, from a session management function entity in said mobile network, mapping information on multicast and broadcast service flows mapped to one or several multicast and broadcast service radio bearer and determining the said one or several multicast and broadcast service flows out of all multicast and broadcast service flows of said multicast and broadcast service session to be the flows mapped to the same multicast and broadcast service radio bearer,
monitoring said sequence numbers corresponding to said multicast and broadcast service flows mapped to said multicast and broadcast service radio bearer,
calculating a sum of said sequence numbers corresponding to said multicast and broadcast service flows mapped to said multicast and broadcast service radio bearer, and
comparing said sum with said maximum of said counter or said threshold.

Item 51. The apparatus according to Item 48, wherein
in relation to said determining, the at least one processor, with the at least one memory and the computer program code, being configured to cause the apparatus to perform:
receiving, from a session management function entity in said mobile network, reset suggestion information indicative of that a maximum of a counter related to said multicast and broadcast service radio bearer of said multicast and broadcast service session is neared and indicative of said one or several multicast and broadcast service flows.

Item 52. The apparatus according to any of Items 45 to 51, wherein
the at least one processor, with the at least one memory and the computer program code, being configured to cause the apparatus to perform:
   detecting inactivity of said multicast and broadcast service session, and
   initiating, upon said inactivity, said resetting, or wherein
the at least one processor, with the at least one memory and the computer program code, being configured to cause the apparatus to perform:
   transmitting, towards a session management function entity in said mobile network, information indicative of that said maximum of said counter or said threshold related to said one or several multicast and broadcast service flows of said multicast and broadcast service session is neared,
   receiving, from said session management function entity in said mobile network, reset trigger information, and
   initiating, upon said reset trigger information, said resetting.

Item 53. An apparatus of a session management function entity in a mobile network, the apparatus comprising
at least one processor,
at least one memory including computer program code, and
at least one interface configured for communication with at least another apparatus,
the at least one processor, with the at least one memory and the computer program code, being configured to cause the apparatus to perform:
   receiving, from a user plane function entity in said mobile network, information indicative of that a maximum of a counter or a threshold related to one or several multicast and broadcast service flows of a multicast and broadcast service session is neared,
   deciding to trigger resetting sequence numbers corresponding to said one or several multicast and broadcast service flows of said multicast and broadcast service session, and
   transmitting, towards said user plane function entity in said mobile network, upon said deciding, reset trigger information.

Item 54. The apparatus according to Item 53, wherein
said deciding is related to a decision or received information of said multicast and broadcast service session getting deactivated.

Item 55. An apparatus of a session management function entity in a mobile network, the apparatus comprising
at least one processor,
at least one memory including computer program code, and
at least one interface configured for communication with at least another apparatus,
the at least one processor, with the at least one memory and the computer program code, being configured to cause the apparatus to perform:
   receiving, from an access node entity in said network, mapping information on multicast and broadcast service flows out of all multicast and broadcast service flows of a multicast and broadcast service session mapped to a multicast and broadcast service radio bearer, and
   transmitting, towards a user plane function entity in said mobile network, said mapping information.

Item 56. An apparatus of a session management function entity in a mobile network, the apparatus comprising
at least one processor,
at least one memory including computer program code, and
at least one interface configured for communication with at least another apparatus,
the at least one processor, with the at least one memory and the computer program code, being configured to cause the apparatus to perform:
   receiving, from an access node entity in said network, reset suggestion information indicative of that a maximum of a counter related to a multicast and broadcast service radio bearer of a multicast and broadcast service session is neared, and
   transmitting, towards a user plane function entity in said mobile network, said reset suggestion information.

Item 57. An apparatus of a session management function entity in a mobile network, the apparatus comprising
at least one processor,
at least one memory including computer program code, and
at least one interface configured for communication with at least another apparatus,
the at least one processor, with the at least one memory and the computer program code, being configured to cause the apparatus to perform:
   transmitting, towards an access node entity in said mobile network, information indicative of resetting sequence numbers corresponding to one or several multicast and broadcast service flows of a multicast and broadcast service session.

Item 58. The apparatus according to Item 57, wherein
the at least one processor, with the at least one memory and the computer program code, being configured to cause the apparatus to perform:
receiving, from a user plane function entity in said network, said information indicative of said resetting sequence numbers corresponding to said one or several multicast and broadcast service flows.

Item 59. The apparatus according to Item 57 or 58, wherein
said access node entity in said mobile network is an access node entity managing said multicast and broadcast service session.

Item 60. The apparatus according to any of Items 57 to 59, wherein
said information indicative of said resetting is transmitted at a time of a deactivation of said multicast and broadcast service session, or wherein
said information indicative of said resetting is transmitted at a time of a activation of said multicast and broadcast service session.

Item 61. An apparatus of an access node entity in a mobile network, the apparatus comprising
at least one processor,
at least one memory including computer program code, and
at least one interface configured for communication with at least another apparatus,
the at least one processor, with the at least one memory and the computer program code, being configured to cause the apparatus to perform:
   receiving information indicative of resetting sequence numbers corresponding to one or several multicast and broadcast service flows of a multicast and broadcast service session, and
   reconfiguring one or several terminals receiving said multicast and broadcast service session in relation to one or more radio bearers mapped to the said one or several multicast and broadcast service flows.

Item 62. The apparatus according to Item 61, wherein
said information indicative of resetting sequence numbers is received together with information indicative of deactivation or activation of said multicast and broadcast service session.

Item 63. The apparatus according to Item 61 or 62, wherein
in relation to said reconfiguring, the at least one processor, with the at least one memory and the computer program code, being configured to cause the apparatus to perform at least one of:
releasing a multicast and broadcast service radio bearer of said multicast and broadcast service session, and adding a new multicast and broadcast service radio bearer for said multicast and broadcast service session,
re-establishing a packet data convergence protocol in relation to a multicast and broadcast service radio bearer of said multicast and broadcast service session, and
re-initializing a counter related to said multicast and broadcast service radio bearer of said multicast and broadcast service session.

Item 64. The apparatus according to any of Items 61 to 63, wherein
the at least one processor, with the at least one memory and the computer program code, being configured to cause the apparatus to perform:
determining a mapping of multicast and broadcast service flows out of said all multicast and broadcast service flows of said multicast and broadcast service session mapped to one or several multicast and broadcast service radio bearers, and
transmitting, towards a session management function entity in said network, mapping information on said mapping.

Item 65. The apparatus according to any of Items 61 to 63, wherein
the at least one processor, with the at least one memory and the computer program code, being configured to cause the apparatus to perform:
determining that a maximum or a threshold of a counter related to said multicast and broadcast service radio bearer of said multicast and broadcast service session is neared, and
transmitting, towards a session management function entity in said network, reset suggestion information indicative of that said maximum or threshold of said counter is neared.

Item 66. The apparatus according to any of Items 61 to 65, wherein
said information indicative of resetting sequence numbers corresponding to said multicast and broadcast service flows mapped to said multicast and broadcast service radio bearer is received from a session management function entity in said network, or wherein
said information indicative of resetting sequence numbers corresponding to said multicast and broadcast service flows mapped to said multicast and broadcast service radio bearer is received from a user plane function entity in said network.

Item 67. A computer program product comprising computer-executable computer program code which, when the program is run on a computer, is configured to cause the computer to carry out the method according to any one of Items 1 to 22.

Item 68. The computer program product according to Item 67, wherein the computer program product comprises a computer-readable medium on which the computer-executable computer program code is stored, and/or wherein the program is directly loadable into an internal memory of the computer or a processor thereof.

### List of acronyms and abbreviations

- 3GPP: Third Generation Partnership Project
- 5GC: 5th Generation core
- AM: acknowledged mode
- CN: core network
- CU-CP: centralized unit control plane
- CU-UP: centralized unit user plane
- DL: downlink
- HARQ: hybrid automatic repeat request
- HFN: hyper frame number
- IE: information element
- MBS: multicast and broadcast services
- MB-SMF: multicast broadcast session management function
- MB-UPF: multicast broadcast user plane function
- MRB: multicast and broadcast services radio bearer
- NGAP: next generation application protocol
- NG-RAN: next generation radio access network
- PDCP: packet data convergence protocol
- PDU: protocol data unit
- PFCP: packet forwarding control protocol
- PTP: precision time protocol
- QFI: quality of service flow identifier
- QoS: quality of service
- RAN: radio access network
- RLC: radio link control
- SDU: service data unit
- SN: sequence number
- UE: user equipment
- UM: unacknowledged mode

## Claims

1. An apparatus of a user plane function entity in a mobile network, the apparatus comprising
means for resetting sequence numbers corresponding to one or several multicast and broadcast service flows out of all multicast and broadcast service flows of a multicast and broadcast service session, and
means for transmitting information indicative of said resetting.

2. The apparatus according to claim 1, wherein
said information indicative of said resetting is transmitted towards a session management function entity in said mobile network, or wherein
said information indicative of said resetting is transmitted towards an access node entity in said mobile network.

3. The apparatus according to claim 2, wherein
said resetting is done at a time of a deactivation of said multicast and broadcast service session, or wherein
said resetting is done at a time of a subsequent activation of said multicast and broadcast service session.

4. The apparatus according to any of claims 1 to 3, further comprising
means for determining that a maximum of a counter or a threshold related to said one or several multicast and broadcast service flows of said multicast and broadcast service session is neared.

5. The apparatus according to claim 4, further comprising
means for monitoring said sequence numbers corresponding to said one or several multicast and broadcast service flows of said multicast and broadcast service session,
means for calculating a sum of said sequence numbers corresponding to said one or several multicast and broadcast service flows of said multicast and broadcast service session, and
means for comparing said sum with said maximum of said counter or said threshold.

6. The apparatus according to any of claim 4, further comprising
means for receiving, from a session management function entity in said mobile network, mapping information on multicast and broadcast service flows mapped to one or several multicast and broadcast service radio bearer and determining the said one or several multicast and broadcast service flows out of all multicast and broadcast service flows of said multicast and broadcast service session to be the flows mapped to the same multicast and broadcast service radio bearer,
means for monitoring said sequence numbers corresponding to said multicast and broadcast service flows mapped to said multicast and broadcast service radio bearer,
means for calculating a sum of said sequence numbers corresponding to said multicast and broadcast service flows mapped to said multicast and broadcast service radio bearer, and
means for comparing said sum with said maximum of said counter or said threshold.

7. The apparatus according to claim 4, further comprising
means for receiving, from a session management function entity in said mobile network, reset suggestion information indicative of that a maximum of a counter related to said multicast and broadcast service radio bearer of said multicast and broadcast service session is neared and indicative of said one or several multicast and broadcast service flows.

8. The apparatus according to any of claims 1 to 7, further comprising
means for detecting inactivity of said multicast and broadcast service session, and
means for initiating, upon said inactivity, said resetting, or further comprising
means for transmitting, towards a session management function entity in said mobile network, information indicative of that said maximum of said counter or said threshold related to said one or several multicast and broadcast service flows of said multicast and broadcast service session is neared,
means for receiving, from said session management function entity in said mobile network, reset trigger information, and
means for initiating, upon said reset trigger information, said resetting.

9. An apparatus of a session management function entity in a mobile network, the apparatus comprising
means for receiving, from a user plane function entity in said mobile network, information indicative of that a maximum of a counter or a threshold related to one or several multicast and broadcast service flows of a multicast and broadcast service session is neared,
means for deciding to trigger resetting sequence numbers corresponding to said one or several multicast and broadcast service flows of said multicast and broadcast service session, and
means for transmitting, towards said user plane function entity in said mobile network, upon said deciding, reset trigger information.

10. The apparatus according to claim 9, wherein
said deciding is related to a decision or received information of said multicast and broadcast service session getting deactivated.

11. An apparatus of a session management function entity in a mobile network, the apparatus comprising
means for receiving, from an access node entity in said network, mapping information on multicast and broadcast service flows out of all multicast and broadcast service flows of a multicast and broadcast service session mapped to a multicast and broadcast service radio bearer, and
means for transmitting, towards a user plane function entity in said mobile network, said mapping information.

12. An apparatus of a session management function entity in a mobile network, the apparatus comprising
means for receiving, from an access node entity in said network, reset suggestion information indicative of that a maximum of a counter related to a multicast and broadcast service radio bearer of a multicast and broadcast service session is neared, and
means for transmitting, towards a user plane function entity in said mobile network, said reset suggestion information.

13. An apparatus of a session management function entity in a mobile network, the apparatus comprising
means for transmitting, towards an access node entity in said mobile network, information indicative of resetting sequence numbers corresponding to one or several multicast and broadcast service flows of a multicast and broadcast service session.

14. The apparatus according to claim 13, further comprising
means for receiving, from a user plane function entity in said network, said information indicative of said resetting sequence numbers corresponding to said one or several multicast and broadcast service flows.

15. The apparatus according to claim 13 or 14, wherein
said access node entity in said mobile network is an access node entity managing said multicast and broadcast service session.

16. The apparatus according to any of claims 13 to 15, wherein
said information indicative of said resetting is transmitted at a time of a deactivation of said multicast and broadcast service session, or wherein
said information indicative of said resetting is transmitted at a time of a activation of said multicast and broadcast service session.

17. An apparatus of an access node entity in a mobile network, the apparatus comprising
means for receiving information indicative of resetting sequence numbers corresponding to one or several multicast and broadcast service flows of a multicast and broadcast service session, and
means for reconfiguring one or several terminals receiving said multicast and broadcast service session in relation to one or more radio bearers mapped to the said one or several multicast and broadcast service flows.

18. The apparatus according to claim 17, wherein
said information indicative of resetting sequence numbers is received together with information indicative of deactivation or activation of said multicast and broadcast service session.

19. The apparatus according to claim 17 or 18, further comprising
means for releasing a multicast and broadcast service radio bearer of said multicast and broadcast service session, and adding a new multicast and broadcast service radio bearer for said multicast and broadcast service session,
means for re-establishing a packet data convergence protocol in relation to a multicast and broadcast service radio bearer of said multicast and broadcast service session, and
means for re-initializing a counter related to said multicast and broadcast service radio bearer of said multicast and broadcast service session.

20. The apparatus according to any of claims 17 to 19, further comprising
means for determining a mapping of multicast and broadcast service flows out of said all multicast and broadcast service flows of said multicast and broadcast service session mapped to one or several multicast and broadcast service radio bearers, and
means for transmitting, towards a session management function entity in said network, mapping information on said mapping.

21. The apparatus according to any of claims 17 to 19, further comprising
means for determining that a maximum or a threshold of a counter related to said multicast and broadcast service radio bearer of said multicast and broadcast service session is neared, and
means for transmitting, towards a session management function entity in said network, reset suggestion information indicative of that said maximum or threshold of said counter is neared.

22. The apparatus according to any of claims 17 to 21, wherein
said information indicative of resetting sequence numbers corresponding to said multicast and broadcast service flows mapped to said multicast and broadcast service radio bearer is received from a session management function entity in said network, or wherein
said information indicative of resetting sequence numbers corresponding to said multicast and broadcast service flows mapped to said multicast and broadcast service radio bearer is received from a user plane function entity in said network.
